(19) Europäisches Patentamt
European Patent Office
Office européen des brevets

(11) **EP 2 573 599 A2**

(12) **EUROPEAN PATENT APPLICATION**

(43) Date of publication:
**27.03.2013 Bulletin 2013/13**

(21) Application number: **12185189.3**

(22) Date of filing: **20.09.2012**

(51) Int Cl.:
*G02B 6/255* (2006.01)   *G02B 6/036* (2006.01)
*G02B 6/26* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **21.09.2011 JP 2011206526**

(71) Applicant: **Sumitomo Electric Industries, Ltd.**
**Osaka-shi,**
**Osaka 541 (JP)**

(72) Inventors:
• **Konishi, Tatsuya**
  **Kangawa (JP)**
• **Nakanishi, Tetsuya**
  **Kangawa (JP)**
• **Hayashi, Tetsuya**
  **Kangawa (JP)**

(74) Representative: **HOFFMANN EITLE**
**Patent- und Rechtsanwälte**
**Arabellastrasse 4**
**81925 München (DE)**

(54) **Optical transmission line**

(57)    There is provided an optical transmission line that includes a bend insensitive fiber (BIF) defined by ITU-T Recommendation G.657 and that reduces the influence of MPI. An optical transmission line 1 includes a first optical fiber 11, a second optical fiber 12 joined to an incident end of the first optical fiber 11, and a third optical fiber 13 joined to an exit end of the first optical fiber 11. The first optical fiber 11 is a bend insensitive fiber (BIF), and each of the second optical fiber 12 and the third optical fiber 13 is a general single mode optical fiber. An attenuation coefficient of an LP11 mode in the first optical fiber 11 at a wavelength of 1310 nm, a splice loss between the first optical fiber and the second optical fiber, a splice loss between the first optical fiber and the third optical fiber, and a length of the first optical fiber satisfy a predetermined relational equation.

FIG. 3

EP 2 573 599 A2

**Description**

BACKGROUND OF THE INVENTION

Field of the Invention

The present invention relates to an optical transmission line including a bend insensitive fiber (BIF).

Description of the Related Art

Bending loss of an optical fiber is required to be small particularly in an FTTx system. BIFs are used in places where they are likely to be bent, for example, telephone exchange stations. BIFs are defined by ITU-T Recommendation G.657, and are classified into grades A1, A2, B2, and B3 according to the magnitude of bending loss. Bending loss is the lowest in the grade B3.

As BIFs, there are known an optical fiber having a trench-type refractive-index structure in which an annular trench having low refractive index is provided in a cladding, and an optical fiber having a depressed refractive-index structure in which the refractive index of a cladding is lower than the refractive index of a jacket. In a BIF having a trench-type or depressed refractive-index structure, low bending loss can be achieved by firmly confining light in a core by a trench provided around the core or a low-refractive-index cladding. In the BIF, not only bending loss of a fundamental mode is low, but also bending loss of a higher order mode is low. Further, the BIF is supposed to be used in a house while being laid with a short length of several meters or being bent.

Therefore, if a higher order mode is excited at a joint portion between an incident end of the BIF and another optical fiber or at a bent portion of the BIF, the higher order mode propagates through the BIF, and interferes with a fundamental mode at a joint portion between an exit end of the BIF and another optical fiber or at a bent portion. This interference is called multi-path interference (MPI). David Z. Chen, et al., "Testing MPI Threshold in Bend Insensitive Fiber Using Coherent Peak-To-Peak Power Method," OFC 2009 NTuC5 (NPL 1) describes that the light intensity is temporally changed by MPI and this sometimes causes transmission error. Ming-Jun Li, et al., "Statistical Analysis of MPI in Bend-insensitive Fibers," OFC 2009 OTuL1 (NPL 2) describes that, in the case of optical transmission at a bit rate of 10 Gbps, MPI needs to be less than -30 dB for error-free transmission.

SUMMARY OF THE INVENTION

An object of the present invention is to provide an optical transmission line that includes a bend insensitive fiber defined by ITU-T Recommendation G.657 and that reduces the influence of MPI.

To achieve the object, there is provided an optical transmission line including (1) a first optical fiber having a core including a center axis, a first optical cladding layer surrounding the core, a second optical cladding layer surrounding the first optical cladding layer, and a jacket layer surrounding the second optical cladding layer, the core having a relative refractive-index difference $\Delta 1$ of 0.25 to 0.37%, the first optical cladding layer having a relative refractive-index difference $\Delta 2$ more than or equal to 0% and less than $\Delta 1$, the second optical cladding layer having a relative refractive-index difference $\Delta 3$ of -0.2% or less, and an LP11 mode having an attenuation coefficient $\alpha_{11}$ at a wavelength of 1310 nm, (2) a second optical fiber joined to one end of the first optical fiber, and (3) a third optical fiber joined to the other end of the first optical fiber. A splice loss A between the first optical fiber and the second optical fiber, a splice loss B between the first optical fiber and the third optical fiber, and a length L [m] of the first optical fiber satisfy Eq. (1):

$$L > \frac{-1}{\alpha_{11}} \cdot \ln \left( 10^{-4} \cdot \frac{10^{-(A+B)/10}}{\left(1-10^{-A/10}\right) \cdot \left(1-10^{-B/10}\right)} \right) \qquad (1)$$

.

In this specification, the term "relative refractive-index difference" refers to the ratio of a difference between the refractive index of each layer and the refractive index of the jacket layer to the refractive index of the jacket layer.

In this case, each of the second optical fiber and the third optical fiber may be a general single-mode optical fiber, and, when the first optical fiber is joined to the general single-mode optical fiber, a coupling efficiency between an LP11 mode in the first optical fiber and an LP01 mode in the general single-mode optical fiber may be 0.5 or less. Further, each of the second optical fiber and the third optical fiber may be a general single-mode optical fiber, and a difference in mode field diameter at the wavelength of 1310 nm between the first optical fiber and the general single-mode optical fiber may be 1 $\mu$m or less. Here, the term "general single-mode optical fiber" refers to an optical fiber that conforms to the ITU-T G.652 standard.

According to another aspect of the present invention, there is provided an optical transmission line including (1) a first optical fiber having a core including a center axis, a first optical cladding layer surrounding the core, a second optical cladding layer surrounding the first optical cladding layer, and a jacket layer surrounding the second optical cladding layer, the core having a relative refractive-index difference $\Delta 1$ of 0.25 to 0.37%, the first optical cladding layer having a relative refractive-index difference $\Delta 2$ more than or equal to 0% and less than $\Delta 1$, the second optical cladding layer having a relative refractive-index difference $\Delta 3$ of -0.2% or less, and an LP11 mode having an attenuation coefficient $\alpha_{11}$ at a wavelength of 1310 nm, and (2) a second optical fiber joined to one end of the first optical fiber. A splice loss A between the first optical fiber and the second optical fiber and a length L [m] of the first optical fiber satisfy the following Eq. (2):

$$L > \frac{-1}{\alpha_{11}} \cdot \ln\left(10^{-4} \cdot \frac{10^{-A/10}}{1 - 10^{-A/10}}\right) \tag{2}$$

In this case, the second optical fiber may be a general single-mode optical fiber, and, when the first optical fiber is joined to the general single-mode optical fiber, a coupling efficiency between an LP11 mode in the first optical fiber and an LP01 mode in the general single-mode optical fiber may be 0.5 or less. Further, the second optical fiber may be a general single-mode optical fiber, and a difference in mode field diameter at the wavelength of 1310 nm between the first optical fiber and the general single-mode optical fiber may be 1 $\mu$m or less.

According to a further aspect of the present invention, there is provided an optical transmission line including (1) a first optical fiber having a core including a center axis, an optical cladding layer surrounding the core, and a jacket layer surrounding the optical cladding layer, the core having a relative refractive-index difference $\Delta 1$ of 0.25 to 0.37%, the optical cladding layer having a relative refractive-index difference $\Delta 2$ more than or equal to -0.3% and less than 0%, and an LP11 mode having an attenuation coefficient $\alpha_{11}$ at a wavelength of 1310 nm, (2) a second optical fiber joined to one end of the first optical fiber, and (3) a third optical fiber joined to the other end of the first optical fiber. A splice loss A between the first optical fiber and the second optical fiber, a splice loss B between the first optical fiber and the third optical fiber, and a length L [m] of the first optical fiber satisfy Eq. (3):

$$L > \frac{-1}{\alpha_{11}} \cdot \ln\left(10^{-4} \cdot \frac{10^{-(A+B)/10}}{\left(1 - 10^{-A/10}\right) \cdot \left(1 - 10^{-B/10}\right)}\right) \tag{3}$$

In this case, each of the second optical fiber and the third optical fiber may be a general single-mode optical fiber, and, when the first optical fiber is joined to the general single-mode optical fiber, a coupling efficiency between an LP11 mode in the first optical fiber and an LP01 mode in the general single-mode optical fiber may be 0.5 or less. Further, each of the second optical fiber and the third optical fiber may be a general single-mode optical fiber, and a difference in mode field diameter at the wavelength of 1310 nm between the first optical fiber and the general single-mode optical fiber may be 1 $\mu$m or less.

According to a still further aspect of the present invention, there is provided an optical transmission line including (1) a first optical fiber having a core including a center axis, an optical cladding layer surrounding the core, and a jacket layer surrounding the optical cladding layer, the core having a relative refractive-index difference $\Delta 1$ of 0.25 to 0.37%, the optical cladding layer having a relative refractive-index difference $\Delta 2$ more than or equal to -0.3% and less than 0%, and an Lop11 mode having an attenuation coefficient $\alpha_{11}$ at a wavelength of 1310 nm, and (2) a second optical fiber joined to one end of the first optical fiber. A splice loss A between the first optical fiber and the second optical fiber and a length L [m] of the first optical fiber satisfy Eq. (4):

$$L > \frac{-1}{\alpha_{11}} \cdot \ln\left(10^{-4} \cdot \frac{10^{-A/10}}{1 - 10^{-A/10}}\right) \tag{4}$$

In this case, the second optical fiber may be a general single-mode optical fiber, and, when the first optical fiber is joined to the general single-mode optical fiber, a coupling efficiency between an LP11 mode in the first optical fiber and an LP01 mode in the general single-mode optical fiber may be 0.5 or less. Further, the second optical fiber may be a general single-mode optical fiber, and a difference in mode field diameter at the wavelength of 1310 nm between the first optical fiber and the general single-mode optical fiber may be 1 $\mu$m or less.

According to the present invention, it is possible to provide an optical transmission line that includes a bend insensitive fiber (BIF) defined by ITU-T Recommendation G.657 and that reduces the influence of MPI.

BRIEF DESCRIPTION OF THE DRAWINGS

Figure 1 is a conceptual view illustrating a refractive index profile of a BIF having a trench-type refractive index structure.
Figure 2 is a conceptual view illustrating a refractive-index profile of a BIF having a depressed refractive index structure.
Figure 3 is a conceptual view explaining a structure of an optical transmission line according to a first embodiment, and MPI caused therein.
Figure 4 is a graph showing the relationship between a length L of a first optical fiber in the first embodiment and a calculated MPI value at a wavelength of 1310 nm.
Figure 5 is a graph showing the relationship between a splice loss and a calculated MPI value at a wavelength of 1310 nm in the first embodiment.
Figure 6 is a conceptual view explaining a structure of an optical transmission line according to a second embodiment, and MPI caused therein.
Figure 7 is a conceptual view of a measuring system according to a first example.
Figure 8 is a graph showing the relationship between an experimental MPI value and a calculated MPI value in the first example.
Figure 9 is a conceptual view of a measuring system 4 according to a second example.
Figure 10 is a graph showing the relationship between a measured MPI value and the number of times of stapling in a third example.

DESCRIPTION OF THE PREFERRED EMBODIMENTS

Embodiments of the present invention will be described below with reference to the drawings. The drawings are provided for descriptive purposes only, and do not limit the scope of the invention. To avoid redundant descriptions, the same reference numerals in the drawings denote the same parts. In the drawings, the scale is not necessarily accurate.

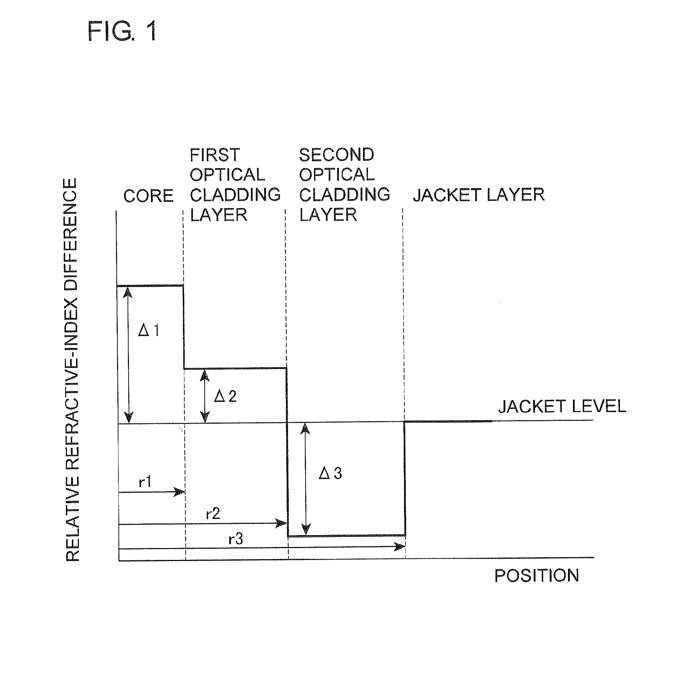

Figure 1 is a conceptual view showing a refractive index profile of a BIF having a trench-type refractive index structure. The trench-type BIF includes a core (radius r1) including a center axis, a first optical cladding layer (radius r2) surrounding the core, a second optical cladding layer (radius r3) surrounding the first optical cladding layer, and a jacket layer surrounding the second optical cladding layer. In the trench-type BIF, a relative refractive-index difference $\Delta1$ of the core is 0.25 to 0.37%, a relative refractive-index difference $\Delta2$ of the first optical cladding layer is 0% or more, and a relative refractive-index difference $\Delta3$ of the second optical cladding layer is -0.2% or less so as to have a relationship such that $\Delta1 > \Delta2 > \Delta3$. Such a BIF meets ITU-T Recommendation G.657.B3.

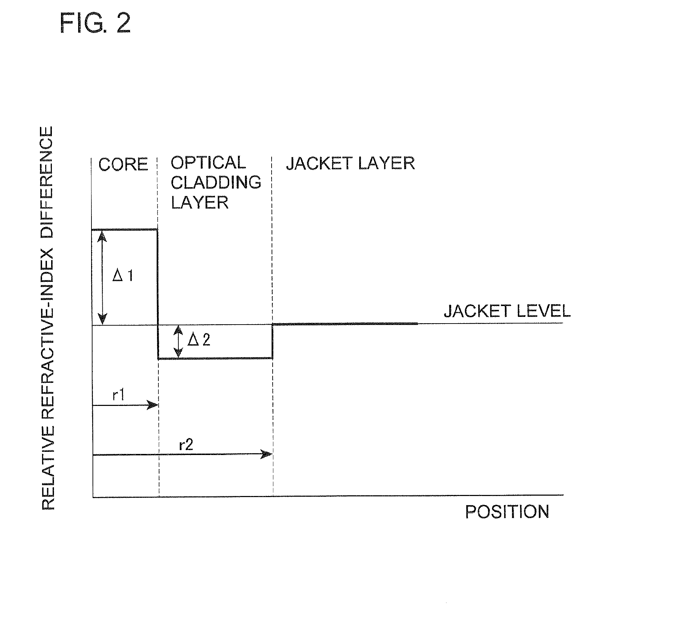

Figure 2 is a conceptual view showing a refractive index profile of a BIF having a depressed refractive index structure. The depressed BIF includes a core (radius r1) including a center axis, an optical cladding layer (radius r2) surrounding the core, and a jacket layer surrounding the optical cladding layer. In the depressed BIF, a relative refractive-index difference $\Delta1$ of the core is 0.25 to 0.37%, and a relative refractive-index difference $\Delta2$ of the optical cladding layer is -0.3 % or more and less than 0%. Such an optical fiber meets ITU-T Recommendation G.657.A2.

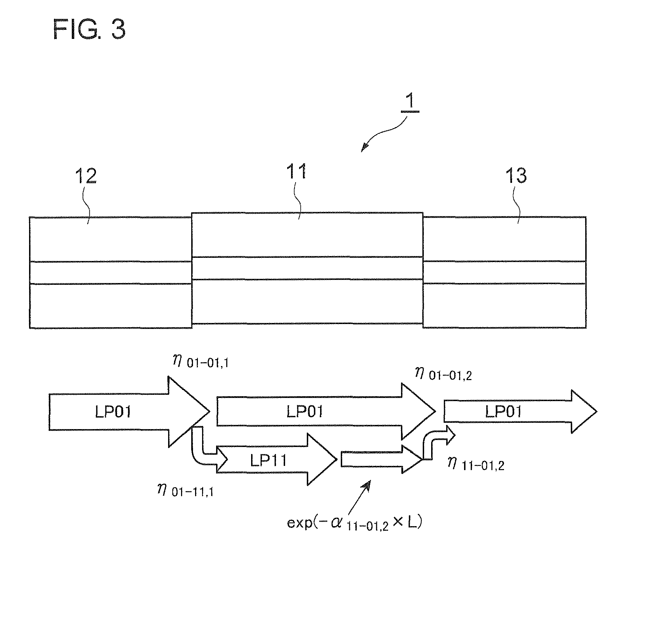

Figure 3 is a conceptual view illustrating a structure of an optical transmission line 1 according to a first embodiment, and MPI caused therein. The optical transmission line 1 includes a first optical fiber 11, a second optical fiber 12 joined to an incident end of the first optical fiber 11, and a third optical fiber 13 joined to an exit end of the first optical fiber 11. The first optical fiber 11 is a BIF, and each of the second optical fiber 12 and the third optical fiber 13 is a general single-mode optical fiber. The general single-mode optical fiber may have a substantially step type refractive index structure.
Part of a fundamental mode (LP01 mode) propagating through the second optical fiber 12 is coupled to a higher order mode (LP11 mode) at a joint portion between the second optical fiber 12 and the first optical fiber 11. Both a fundamental mode (LP01 mode) and a higher order mode (LP11 mode) are incident on the first optical fiber 11. Most of the fundamental mode (LP01 mode) propagating through the first optical fiber 11 is coupled to a fundamental mode (LP01 mode) at a joint portion between the first optical fiber 11 and the third optical fiber 13. Part of the higher order mode (LP11 mode) propagating through the first optical fiber 11 is coupled to a fundamental mode (LP01 mode) at the joint portion between the first optical fiber 11 and the third optical fiber 13.
Therefore, in the third optical fiber 13, the fundamental mode originating from the fundamental mode in the first optical fiber 11 (hereinafter referred to as a "fundamental component") and the fundamental mode originating from the higher order mode in the first optical fiber 11 (hereinafter referred to as a "higher order component") interfere. This is MPI. The magnitude of MPI is represented by the ratio between the intensity of the higher order component and the intensity of the fundamental component in the third optical fiber.

The electric field of the fundamental component is designated as $E_0\exp(j\phi_0)$, and the electric field of the higher order component is designated as $\alpha E_0\exp(J\phi_1)$. The electric field of the fundamental mode (LP01 mode) in the third optical fiber 13 is expressed by Eq. (5a), and the intensity of the fundamental mode (LP01 mode) in the third optical fiber 13 is expressed by Eq. (5b), and MPI is expressed by Eq. (6):

$$E_0\exp(j\phi_0)+\alpha E_0\exp(j\phi_1) \tag{5a}$$

$$|E_0|^2+\alpha^2|E_0|^2+2\alpha|E_0|^2\cos(\phi_0-\phi_1)=|E_0|^2\{1+\alpha^2+2\alpha\cos(\phi_0-\phi_1)\} \tag{5b}$$

$$MPI=\alpha^2|E_0|^2/|E_0|^2=\alpha^2 \tag{6}$$

Experimentally, the intensity expressed by Eq. (5b) is observed as the intensity of light guided through the third optical fiber 13. In the third optical fiber 13, the received light intensity is the highest when the phase difference between the fundamental component and the higher order component is 0, and the received light intensity is the lowest when the phase difference between the fundamental component and the higher order component is $\pi$. A ratio ptp (peak to peak) between the highest received light intensity and the lowest received light intensity is expressed by Eq. (7). Using Eq. (7), Eq. (6) is expressed by Eq. (8).

$$ptp=\frac{1+\alpha^2+2\alpha}{1+\alpha^2-2\alpha}=\frac{(1+\alpha)^2}{(1-\alpha)^2} \tag{7}$$

$$MPI_{dB}=20\cdot\log_{10}\left(\frac{10^{ptp_{dB}/20}-1}{10^{ptp_{dB}/20}+1}\right) \tag{8}$$

As illustrated in Fig. 3, let $\eta_{01\text{-}01,1}$ be a coupling efficiency from the fundamental mode in the second optical fiber 12 to the fundamental mode in the first optical fiber 11, and let $\eta_{01\text{-}11,1}$ be a coupling efficiency from the fundamental mode in the second optical fiber 12 to the higher order mode in the first optical fiber 11 at the joint portion between the second optical fiber 12 and the first optical fiber 11. Let $\eta_{01\text{-}01,2}$ be a coupling efficiency from the fundamental mode in the first optical fiber 11 to the fundamental mode in the third optical fiber 13, and let $\eta_{11\text{-}01,2}$ be a coupling efficiency from the higher order mode in the first optical fiber 11 to the fundamental mode in the third optical fiber 13 at the joint portion between the first optical fiber 11 and the third optical fiber 13,. Let L be a length of the first optical fiber 11. Let $\alpha_{11}$ be an attenuation coefficient of the higher order mode in the first optical fiber 11. A transmission loss [dB] of the higher order mode in the first optical fiber 11 is expressed by $10\times\log_{10}(\exp(-\alpha_{11}L))$. Attenuation of the fundamental mode in the first optical fiber 11 is deemed as 0.

An intensity $P_{01}$ of the fundamental component in the third optical fiber 13 is expressed by Eq. (9). An intensity $P_{11}$ of the higher order component in the third optical fiber 13 is expressed by Eq. (10). MPI is expressed by Eq. (11). Using Eq. (11), MPI can be estimated from $\eta$ and $\alpha$ of a measuring system.

$$P_{01}=\eta_{01\text{-}01,1}\cdot\eta_{01\text{-}01,2} \tag{9}$$

$$P_{11}=\eta_{01\text{-}11,1}\cdot\exp(-\alpha_{11}L)\cdot\eta_{11\text{-}01,2} \tag{10}$$

$$MPI = \frac{P_{11}}{P_{01}} = \frac{\eta_{01-11,1} \cdot \exp(-\alpha_{11}L) \cdot \eta_{11-01,2}}{\eta_{01-01,1} \cdot \eta_{01-01,2}} \} \qquad (11)$$

As shown in Eq. (11), MPI is determined by the coupling efficiencies $\eta_{01-01,1}$, $\eta_{01-11,1}$, $\eta_{01-01,2}$, and $\eta_{11-01,2}$, the attenuation coefficient $\alpha_{11}$ of the higher order mode in the first optical fiber 11, and the length L of the first optical fiber 11. To reduce MPI, preferably, the coupling efficiency $\eta_{01-11,1}$ and the coupling efficiency $\eta_{11-01,2}$ are minimized, the attenuation coefficient $\alpha_{11}$ is maximized, and L is maximized.

The coupling efficiency is determined by the difference in mode field diameter and the lateral offset between two optical fibers joined to each other. To reduce MPI, both the difference in mode field diameter and the lateral offset are preferably decreased. The coupling efficiencies $\eta_{01-01,1}$ and $\eta_{01-01,2}$ expressed in dB represent splice losses. In other words, MPI decreases as the splice loss decreases.

The coupling efficiency $\eta_{01-11,1}$ is preferably 0.5 or less, and the coupling efficiency $\eta_{11-01,2}$ is preferably 0.5 or less. Further, the difference in mode field diameter between the first optical fiber 11 and the second optical fiber 12 at a wavelength of 1310 nm is preferably 1 $\mu$m or less. The difference in mode field diameter between the first optical fiber 11 and the third optical fiber 13 at the wavelength of 1310 nm is preferably 1 $\mu$m or less.

The attenuation coefficient $\alpha_{11}$ of the higher order mode in the first optical fiber 11 is determined by the laying state (diameter of given bend) of the first optical fiber 11 and the refractive index profile of the first optical fiber 11. MPI can be reduced by increasing the length L of the first optical fiber 11, regardless of the values of 11 and $\alpha_{11}$.

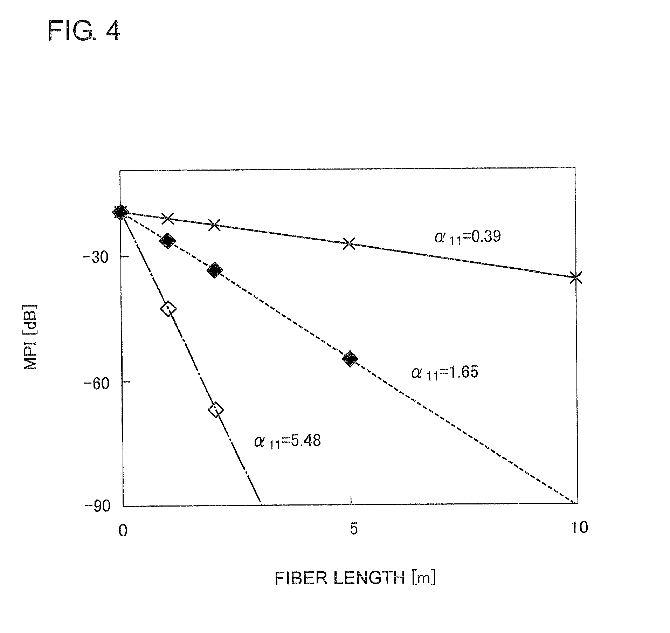

Figure 4 is a graph showing the relationship between the length L of the first optical fiber 11 and the calculated MPI value at the wavelength of 1310 nm. Here, the splice loss between the first optical fiber 11 and the second optical fiber 12 is 1.0 dB, and the splice loss between the first optical fiber 11 and the third optical fiber 13 is 1.0 dB. At this time, $\eta_{01-01,1}$ is 0.78, $\eta_{01-01,2}$ is 0.78, $\eta_{01-11,1}$ is 0.21, and $\eta_{11-01,2}$ is 0.21, and the coupling efficiency to another mode is 0.01. Three types of first optical fibers 11 that are different in attenuation coefficient $\alpha_{11}$ of the higher order mode are assumed. The attenuation coefficients $\alpha_{11}$ of the fibers are 0.39, 1.65, and 5.48. The first optical fiber (BIF) 11 whose $\alpha_{11}$ is 0.39 conforms to G.657.B3. The other two types of first optical fibers (BIF) 11 conform to G.657.A2.

As shown in Fig. 4, MPI decreases as the length L of the first optical fiber 11 increases. The decrease amount of MPI per unit length depends on $\alpha_{11}$. The decrease amount of MPI per unit length decreases as $\alpha_{11}$ decreases (the loss of the LP11 mode decreases). For example, in the first optical fiber 11 whose $\alpha_{11}$ is 0.39, MPI is less than -30 dB when the length L is 7 m or more.

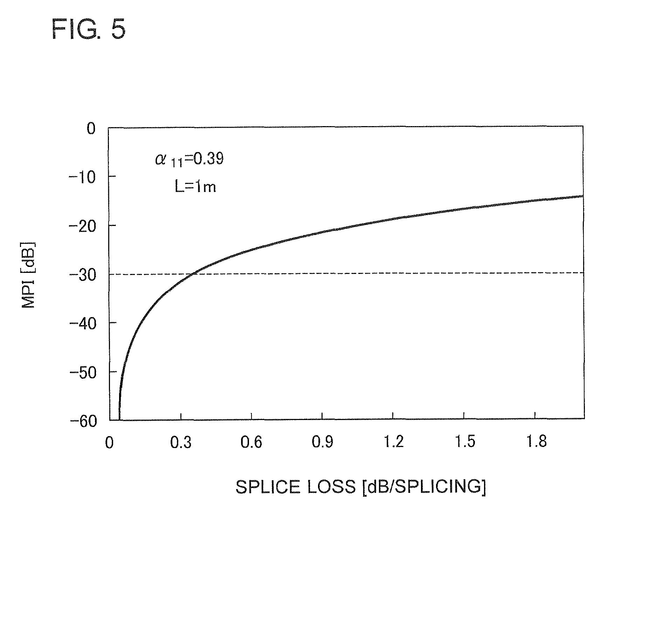

Figure 5 is a graph showing the relationship between the splice loss and the calculated MPI value at the wavelength of 1310 nm in the first embodiment. Here, the length L of the first optical fiber 11 is 1 m. The attenuation coefficient $\alpha_{11}$ of the higher order mode in the first optical fiber 11 is 0.39. The splice loss between the first optical fiber 11 and the second optical fiber 12 is equal to the splice loss between the first optical fiber 11 and the third optical fiber 13. As shown in Fig. 5, MPI increases as the splice loss increases. When the splice loss is 0.3 dB or less at both ends of the first optical fiber 11, MPI is less than -30 dB.

In the calculation examples of Figs. 4 and 5, the changes in MPI are shown using the splice loss and the fiber length as parameters. However, since the splice loss is determined by the splicing method (fusion splicing, V-groove splicing, mechanical splicing) in actual use, it is supposed that the degree of freedom of the value is low. Therefore, as a method for suppressing MPI of the system, the fiber length L is preferably optimized as long as the splicing state is specified and the possible range of the splice loss is limited beforehand.

Accordingly, by solving Eq. (11) for the fiber length L, the minimum length L at which MPI is less than -40 dB, which includes a margin of an error of $\pm 10$ dB (described below) to an actual target value of -30 dB, is expressed by Eq. (12). Here, A represents the splice loss [dB] between the second optical fiber 12 and the first optical fiber 11, and B represents the splice loss [dB] between the first optical fiber 11 and the third optical fiber 13. When the length L of the first optical fiber 11 is set to satisfy Eq. (12), an actual MPI value can become -30 dB:

$$L > \frac{-1}{\alpha_{11}} \cdot \ln\left( 10^{-4} \cdot \frac{10^{-(A+B)/10}}{(1-10^{-A/10}) \cdot (1-10^{-B/10})} \right) \qquad (12)$$

Numerical examples of the parameters are as follows. In the case of fusion splicing, the values of splice losses A and B are assumed to be less than 0.3 dB. In this case, 0.3 is used as the values of splice losses A and B. Since the attenuation coefficient $\alpha_{11}$ of the higher order mode in the first optical fiber 11 is determined by the refractive index profile, it varies among fibers. In addition, the attenuation coefficient $\alpha_{11}$ has a wavelength dependency, and the attenuation coefficient $\alpha_{11}$ increases as the wavelength increases within the wavelength range of 1310 to 1650 nm. Therefore, MPI frequently becomes the largest at the wavelength of 1310 nm. In general, $\alpha_{11}$ at 1310 nm is within the range of 0.2 to 0.5 in a BIF that conforms to ITU-T Recommendation G.657.B3.

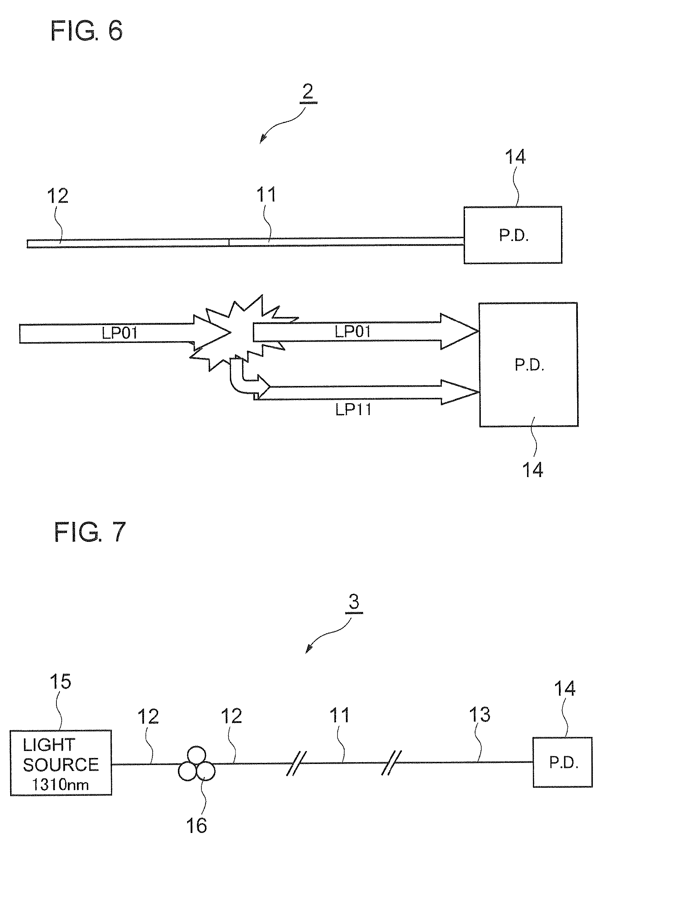

Figure 6 is a conceptual view illustrating an optical transmission line 2 according to a second embodiment, and MPI caused therein. The optical transmission line 2 includes a first optical fiber 11, a second optical fiber 12 joined to an incident end of the first optical fiber 11, and a photo detector 14 that receives light guided through the second optical fiber 12. The first optical fiber 11 is a BIF, and the second optical fiber 12 is a general single-mode optical fiber.

In the second embodiment, MPI is expressed by Eq. (13). Here, at a joint portion between the second optical fiber 12 and the first optical fiber 11, let $\eta_{01\text{-}01}$ be a coupling efficiency from a fundamental mode in the second optical fiber 12 to a fundamental mode in the first optical fiber 11, and let $\eta_{01\text{-}11}$ be a coupling efficiency from the fundamental mode in the second optical fiber 12 to a higher order mode in the first optical fiber 11.

$$MPI = \frac{\eta_{01\text{-}11} \cdot \exp(-\alpha_{11}L)}{\eta_{01\text{-}01}} \qquad (13)$$

By solving Eq. (13) for the fiber length L, the minimum length L at which MPI becomes less than -40 dB, which includes a margin of an error of $\pm 10$ dB (described below) to an actual target value of -30 dB, is expressed by Eq. (14). Here, A represents the splice loss [dB] between the second optical fiber 12 and the first optical fiber 11. In the optical transmission line 2 of the second embodiment, when the length L of the first optical fiber 11 is set to satisfy Eq. (14), an actual MPI value can become -30 dB.

$$L > \frac{-1}{\alpha_{11}} \cdot \ln\left( 10^{-4} \cdot \frac{10^{-A/10}}{1 - 10^{-A/10}} \right) \qquad (14)$$

A BIF is supposed to be used in a state in which bend having a small radius (e.g., radius of curvature R is 5 to 15 mm) is given thereto. In this case, excitation of a higher order mode and recoupling to a fundamental mode occur at a portion of the BIF to which bend having a small radius is given. Hence, it is preferable to handle that portion similarly to the joint portion. For example, in a BIF that conforms to G.657.B3 and corresponds to the optical fiber illustrated in Fig. 1, as the standard of bending loss, the bending loss is less than 0.15 dB/turn when the radius of curvature R is 5 mm, and a part of a fundamental mode lost at the bent portion propagates as a higher order mode (a cladding mode propagating through the cladding) and recoupled to a fundamental mode at the bent portion or the joint portion, so that MPI occurs. Therefore, Eq. (12) and Eq. (14) are preferably extended to include the influence of bending. However, the influence of bending on excitation of the higher order mode and recoupling to the fundamental mode is about one digit smaller than the influence of splice loss. Unless a bent having an extremely small radius of curvature R (radius of curvature R < 5 mm) is continuously given at a short interval (about several centimeters), MPI can become -30 dB in actual use by satisfying the relationships of Eq. (12) and Eq. (14).

Next, an example will be described. Figure 7 is a conceptual view schematically illustrating a configuration of a measuring system 3 according to a first example. The measuring system 3 measures MPI of the optical transmission line 1 of the first embodiment by experiment. A first optical fiber 11 was a BIF, and three types of fibers 1 to 3 were used as the first optical fiber 11. A length L of the first optical fiber 11 was 1 m. A second optical fiber 12 and a third optical fiber 13 were general single-mode optical fibers. The first optical fiber 11 and the second optical fiber 12 were subjected to fusion splicing, and the first optical fiber 11 and the third optical fiber 13 were subjected to fusion splicing. A light source 15 was provided at an incident end of the second optical fiber 12, and a photo detector 14 was provided at an exit end of the third optical fiber 13. On the second optical fiber 12, a polarization scrambler 16 was provided. MPI at a wavelength of 1310 nm was measured by a measuring method described in Ming-Jun Li, et al. (NPL 2). Also, MPI at the wavelength of 1310 nm was calculated according to Eq. (11).

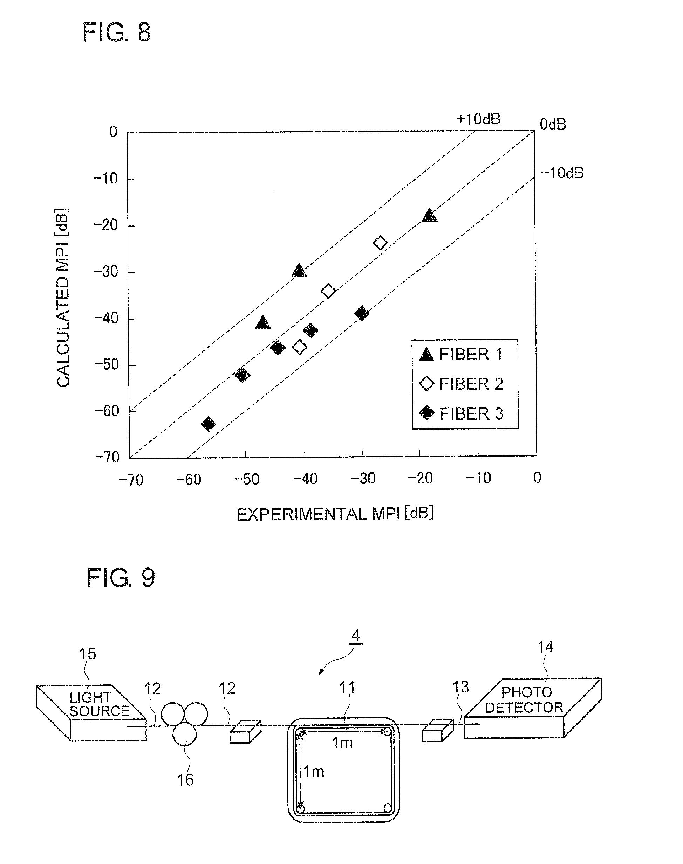

Table 1 shows numerical values which specify a refractive index profile of fibers 1 to 3 used as the first optical fiber 11 in the first example. Table 2 shows specifications, experimental MPI values, and calculated MPI values of the three types of fibers 1 to 3. Figure 8 is a graph showing the relationship between the experimental MPI value and the calculated MPI value in the first example.

[Table 1]

| | refractive index profile | Δ1 % | Δ2 % | Δ3 % | r1 μm | r2 μm | r3 μm |
|---|---|---|---|---|---|---|---|
| Optical fiber 1 | trench-type refractive index structure | 0.36 | 0.02 | -0.68 | 3.4 | 8.7 | 13.5 |
| Optical fiber 2 | trench-type refractive index structure | 0.37 | 0.17 | -0.28 | 3.6 | 8.8 | 14 |
| Optical fiber 3 | depressed refractive index structure | 0.37 | -0.04 | / | 4.2 | 20.6 | / |

[Table 2]

| | λcc [nm] | R10 Bending loss [dB/10t] | Incident end splice loss [dB] | Exit end splice loss [dB] | Experimental MPI [dB] | Theoretical MPI [dB] |
|---|---|---|---|---|---|---|
| Fiber 1 | 1226 | 0.06 | <0.1 | <0.1 | -47 | -41 |
| | | | 1.45 | <0.1 | -41 | -29 |
| | | | 1.37 | 1.37 | -18 | -18 |
| Fiber 2 | 1248 | 0.23 | <0.1 | <0.1 | -41 | -46 |
| | | | 1.6 | <0.1 | -36 | -34 |
| | | | 1.6 | 0.9 | -27 | -24 |
| Fiber 3 | 1237 | 0.45 | <0.1 | <0.1 | -56 | -63 |
| | | | 1.1 | <0.1 | -51 | -52 |
| | | | 0.5 | 0.9 | -44 | -47 |
| | | | 1.2 | 0.9 | -39 | -43 |
| | | | 1.5 | 1.5 | -30 | -39 |

As shown in Table and Fig. 8, the error between the experimental MPI value and the calculated MPI value is within a range of $\pm 10$ dB. Therefore, when the fiber length L is set such that the calculated MPI value = -40 dB, in consideration of this error, the actual measured MPI value can become less than -30 dB. Thus, Eq. (12) and Eq. (14) can be used.

Figure 9 is a conceptual view schematically illustrating a configuration of a measuring system 4 according to a second example. The measuring system 4 also measures MPI of the optical transmission line 1 of the first embodiment by experiment. A first optical fiber 11 was a BIF. Columnar objects having a radius of curvature of 5 mm were provided at four corners of a square of 1 m side, and the first optical fiber was wound around the objects only 20 times. A second optical fiber 12 and a third optical fiber 13 were general single-mode optical fibers. The first optical fiber 11 and the second optical fiber 12 were joined by a V-groove, and the first optical fiber 11 and the third optical fiber 13 were joined by a V-groove. A light source 15 was provided at an incident end of the second optical fiber 12, and a photo detector 14 was provided at an exit end of the third optical fiber 13. On the second optical fiber 12, a polarization scrambler 16 was provided.

The cutoff wavelength of the first optical fiber 11 was about 1250 nm. The measuring wavelength was 1310 nm. The splice loss was less than 0.3 dB. The bending loss was less than 0.1 dB/turn when the radius of curvature was 5 mm. The measured MPI value was $50 \pm 3$ dB. Thus, even when a bend corresponding to a radius of curvature R of 5 mm was given to the first optical fiber 11 at an interval of at least 1 m, MPI becomes less than -30 dB.

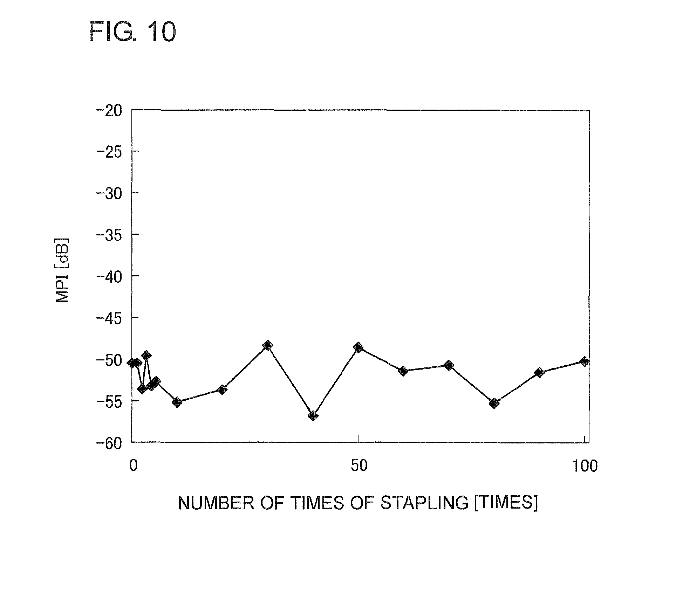

In a third example, a stapling test was conducted on a first optical fiber (BIF) 11. An optical fiber cable having a diameter of 3 mm and including a BIF was stapled at an interval of about 5 cm, and the change in MPI was measured. Figure 10 is a graph showing the relationship between the measured MPI value and the number of times of stapling in the third example. As shown in Fig. 10, even when stapling was performed at an interval of 5 cm, a significant change was not found in the measured MPI value. It is shown that the splice loss at the joint portion of the optical fiber is more dominant on MPI than the given bend.

Various types of bend insensitive fibers (BIFs) are now used, and have wide-ranging uses. A BIF is supposed to be used with a short length of 1 to 5 m. In this case, transmission error resulting from MPI may occur, as described in David Z. Chen, et al. (NPL 1). In general, in 10G transmission, it is necessary for error-free transmission that MPI should be less than -30 dB. The value of MPI is determined by the splice loss between the BIF and another fiber, the loss $\alpha_{11}$ of a higher order mode (LP11 mode) in the BIF, and the fiber length of the BIF. Therefore, when the splice loss of the system and $\alpha_{11}$ of the BIF are known, the occurrence of transmission error can be avoided by presetting the length L of the first optical fiber 11 to be more than or equal to a length such that MPI becomes less than -30 dB, as in the embodiments of the present invention.

**Claims**

1. An optical transmission line comprising:

   a first optical fiber having a core including a center axis, a first optical cladding layer surrounding the core, a second optical cladding layer surrounding the first optical cladding layer, and a jacket layer surrounding the second optical cladding layer, the core having a relative refractive-index difference Δ1 of 0.25 to 0.37%, the first optical cladding layer having a relative refractive-index difference Δ2 more than or equal to 0% and less than Δ1, the second optical cladding layer having a relative refractive-index difference Δ3 of -0.2% or less, and an LP11 mode having an attenuation coefficient $\alpha_{11}$ at a wavelength of 1310 nm;
   a second optical fiber joined to one end of the first optical fiber; and
   a third optical fiber joined to the other end of the first optical fiber,
   wherein a splice loss A between the first optical fiber and the second optical fiber, a splice loss B between the first optical fiber and the third optical fiber, and a length L [m] of the first optical fiber satisfy Eq. (1):

   $$L > \frac{-1}{\alpha_{11}} \cdot \ln\left( 10^{-4} \cdot \frac{10^{-(A+B)/10}}{\left(1 - 10^{-A/10}\right) \cdot \left(1 - 10^{-B/10}\right)} \right) \qquad (1)$$

   .

2. The optical transmission line according to Claim 1,
   wherein each of the second optical fiber and the third optical fiber is a general single-mode optical fiber, and
   wherein, when the first optical fiber is joined to the general single-mode optical fiber, a coupling efficiency between the LP11 mode in the first optical fiber and an LP01 mode in the general single-mode optical fiber is 0.5 or less.

3. The optical transmission line according to Claim 1,
   wherein each of the second optical fiber and the third optical fiber is a general single-mode optical fiber, and
   wherein a difference in mode field diameter at the wavelength of 1310 nm between the first optical fiber and the general single-mode optical fiber is 1 μm or less.

4. An optical transmission line comprising:

   a first optical fiber having a core including a center axis, a first optical cladding layer surrounding the core, a second optical cladding layer surrounding the first optical cladding layer, and a jacket layer surrounding the second optical cladding layer, the core having a relative refractive-index difference Δ1 of 0.25 to 0.37%, the first optical cladding layer having a relative refractive-index difference Δ2 more than or equal to 0% and less than Δ1, the second optical cladding layer having a relative refractive-index difference Δ3 of -0.2% or less, and an LP11 mode having an attenuation coefficient $\alpha_{11}$ at a wavelength of 1310 nm; and
   a second optical fiber joined to one end of the first optical fiber,
   wherein a splice loss A between the first optical fiber and the second optical fiber and a length L [m] of the first optical fiber satisfy the following Eq. (2):

$$L > \frac{-1}{\alpha_{11}} \cdot \ln\left( 10^{-4} \cdot \frac{10^{-A/10}}{1 - 10^{-A/10}} \right) \qquad (2)$$

.

5. The optical transmission line according to Claim 4,
   wherein the second optical fiber is a general single-mode optical fiber, and
   wherein, when the first optical fiber is joined to the general single-mode optical fiber, a coupling efficiency between the LP11 mode in the first optical fiber and an LP01 mode in the general single-mode optical fiber is 0.5 or less.

6. The optical transmission line according to Claim 4,
   wherein the second optical fiber is a general single-mode optical fiber, and
   wherein a difference in mode field diameter at the wavelength of 1310 nm between the first optical fiber and the general single-mode optical fiber is 1 $\mu$m or less.

7. An optical transmission line comprising:

   a first optical fiber having a core including a center axis, an optical cladding layer surrounding the core, and a jacket layer surrounding the optical cladding layer, the core having a relative refractive-index difference $\Delta 1$ of 0.25 to 0.37%, the optical cladding layer having a relative refractive-index difference $\Delta 2$ more than or equal to -0.3% and less than 0%, and an LP11 mode having an attenuation coefficient $\alpha_{11}$ at a wavelength of 1310 nm;
   a second optical fiber joined to one end of the first optical fiber; and
   a third optical fiber joined to the other end of the first optical fiber,
   wherein a splice loss A between the first optical fiber and the second optical fiber, a splice loss B between the first optical fiber and the third optical fiber, and a length L [m] of the first optical fiber satisfy Eq. (3):

$$L > \frac{-1}{\alpha_{11}} \cdot \ln\left( 10^{-4} \cdot \frac{10^{-(A+B)/10}}{\left(1 - 10^{-A/10}\right) \cdot \left(1 - 10^{-B/10}\right)} \right) \qquad (3)$$

.

8. The optical transmission line according to Claim 7,
   wherein each of the second optical fiber and the third optical fiber is a general single-mode optical fiber, and
   wherein, when the first optical fiber is joined to the general single-mode optical fiber, a coupling efficiency between the LP11 mode in the first optical fiber and an LP01 mode in the general single-mode optical fiber is 0.5 or less.

9. The optical transmission line according to Claim 7,
   wherein each of the second optical fiber and the third optical fiber is a general single-mode optical fiber, and
   wherein a difference in mode field diameter at the wavelength of 1310 nm between the first optical fiber and the general single-mode optical fiber is 1 $\mu$m or less.

10. An optical transmission line comprising:

    a first optical fiber having a core including a center axis, an optical cladding layer surrounding the core, and a jacket layer surrounding the optical cladding layer, the core having a relative refractive-index difference $\Delta 1$ of 0.25 to 0.37%, the optical cladding layer having a relative refractive-index difference $\Delta 2$ more than or equal to -0.3% and less than 0%, and an LP11 mode having an attenuation coefficient $\alpha_{11}$ at a wavelength of 1310 nm; and
    a second optical fiber joined to one end of the first optical fiber,
    wherein a splice loss A between the first optical fiber and the second optical fiber and a length L [m] of the first optical fiber satisfy Eq. (4):

$$L > \frac{-1}{\alpha_{11}} \cdot \ln\left( 10^{-4} \cdot \frac{10^{-A/10}}{1 - 10^{-A/10}} \right) \qquad (4)$$

.

11. The optical transmission line according to Claim 10,
    wherein the second optical fiber is a general single-mode optical fiber, and

wherein, when the first optical fiber is joined to the general single-mode optical fiber, a coupling efficiency between the LP11 mode in the first optical fiber and an LP01 mode in the general single-mode optical fiber is 0.5 or less.

12. The optical transmission line according to Claim 10,
   wherein the second optical fiber is a general single-mode optical fiber, and
   wherein a difference in mode field diameter at the wavelength of 1310 nm between the first optical fiber and the general single-mode optical fiber is 1 $\mu$m or less.

# FIG. 1

FIG. 2

FIG. 3

$\eta_{01-01,1}$

$\eta_{01-01,2}$

LP01

LP01

LP01

$\eta_{01-11,1}$

LP11

$\eta_{11-01,2}$

$\exp(-\alpha_{11-01,2} \times L)$

FIG. 4

FIG. 5

FIG. 6

FIG. 7

FIG. 8

FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DAVID Z. CHEN et al.** Testing MPI Threshold in Bend Insensitive Fiber Using Coherent Peak-To-Peak Power Method. *OFC,* 2009

- **MING-JUN LI et al.** Statistical Analysis of MPI in Bend-insensitive Fibers. *OFC,* 2009